# EUROPEAN PATENT APPLICATION

(11) **EP 1 930 065 A2**
(43) Date of publication of application: **11.06.2008**
(21) Application number: 07122712.8
(22) Date of filing: 10.12.2007
(51) Int. Cl.: B01D 53/06, B01D 53/88

(54) **Treating assembly for VOC gases**

(30) Priority: 08.12.2006 FI 20060497 U
(71) Applicant: Vocci Oy, 41330 Vihtavuori (FI)
(72) Inventor: Lylykangas, Reijo, 41330 Vihtavuori (FI)
(74) Representative: Träskman, Berndt Hilding

(57) **Abstract**

The invention relates to a treatment assembly for VOC gases including two or more treatment units. The invention also relates to a method for treating VOC gases in a treatment assembly having two or more treatment units. The treatment assembly (1) has two or more treatment compartments (1A, 1D), such as adsorption compartments (1A) and desorption compartments (1D), and one or more treatment units (11), such as adsorbent units (11) and/or catalyst units, and said one or more treatment units (11) are arranged to be transferred to said two or more treatment compartments (1A, 1D), such as from the adsorption compartment (1A) to the desorption compartment (1D) or vice versa, and/or said two or more treatment compartments (1A, 1D) are connected with one or more connecting units for leading VOC gases to nested treatment compartments, and the treatment assembly (1) additionally has one or more adjustable gas-leading units for discharging the gas and/or feeding the gas to said nested treatment compartments.

## Description

### Technical background

The invention relates to a treatment assembly for VOC gases including two or more treatment units. The invention also relates to a method for treating VOC gases in a treatment assembly having two or more treatment units.

Activated carbon and zeolite adsorbers are commonly known techniques in the collection of VOC gases. Other porous materials, such as aluminum and silicon oxides, can also be used. The use of adsorbers is advantageous when the concentrations of VOC gases are low. Then a great amount of assisting energy is required in catalytic combustion and particularly in thermal combustion for keeping the temperature at the level required by combustion. This produces high operating costs. With adsorption, the concentration of VOC gases can be raised to such a high level that no additional energy is needed. At the same time, the gas amount treated during combustion decreases essentially. With zeolites, the concentration is typically increased 5-10-fold; with activated carbon the concentration is usually increased even more than that.

Activated carbon is the most common adsorbent due to its economic price and large specific surface area formed by micropores. In addition, its competitive strength is improved by the easy regenerability, chemical stability, and high adsorptive capacity. The specific surface area of granular activated carbons used for gas and steam adsorption is 1000-1500 m²/g, the density is 300-450 kg/m³, the micropore volume is 0.6-0.8 cm³/g, and the solid carbon density is about 2000 kg/m³.

Four different methods are used in the regeneration/desorption of activated carbon:
- periodic variation of temperature
- periodic variation of pressure
- use of inert cleaning gas
- use of displacing cleaning gas
   The selection of the method used in regeneration depends essentially on the further treatment of the gas. If the gas is recycled for reuse (water-soluble gases), then the VOC gases are separated either by distillation or with the cryotechnique. In this case a vacuum or steam is used in regeneration. This technique is economically profitable only for the most expensive solutions.
   The most common method is to concentrate VOC gases for thermal or catalytic combustion. Thermal combustion does not require additional energy when the VOC concentration ranges typically between 2-10 g/Nm³ and between 0.5-10 g/Nm³ in catalytic combustion. If the VOC concentration of the exhaust gas is 50 mg/Nm³, then, depending on the combustion technique, a 10-200-fold concentration is required for avoiding additional energy in the combustion stage. For the combustion, the regeneration of the adsorber is usually performed with periodic variation of temperature or by using displacing cleaning gas.
   In current adsorbers, long collection times (3-8 weeks) are often strived at. After this, gas is led to another adsorber and the regeneration of the full tank is started. Often an entire adsorption plant comprises three collection tanks and one regeneration apparatus. One is subjected to regeneration, two are adsorbing. This system requires a great amount of pipeworks, valves and monitoring and control equipment with several sensors. Filling of the adsorber proceeds as a front. When the front has progressed through the entire accumulating cushion, VOC gases can access the exhaust gas. This condition can be monitored with hydrocarbon analyzers, but it is expensive due to the high price and continuous calibration need of the analyzers. Therefore adsorbers are often controlled according to experience-based time constants using cautious, i.e. too short times. In this case the adsorbers' capacity is not in full use.
   A frequent problem with the gas purification apparatuses is also that gas pipeworks and valves require a lot of space and produce costs. Thus the purification capacity of the apparatus as computed relative to the total volume of the apparatus remains relatively low.

### Description of invention

A treatment assembly for VOC gases, which is technically (extremely) simple, has been invented now.

To achieve this object, the invention is characterized by the features specified in the independent claims. Some of the advantageous embodiments of the invention are set forth in the other claims.

The treatment assembly according to the invention has two or more treatment compartments, such as adsorption compartments and desorption compartments, and one or more treatments units, such as adsorbent units and/or catalyst units, and
- said one or more treatment units are arranged to be transferred to said two or more treatment compartments, such as from an adsorption compartment to a desorption compartment or vice versa, and/or
- said two or more treatment compartments are connected with one or more connecting units for leading VOC gases to nested treatment compartments, and the treatment assembly additionally has one or more adjustable gas-leading units for discharging and/or feeding the gas to said nested treatment compartments.

According to an object of the invention, the treatment assembly has one or more adsorbent units and one or more adsorption compartments for adsorbing VOC compounds, and one or more desorption compartments for desorbing adsorbed VOC compounds, and at least a part of an adsorbent unit is arranged to be transferred from an adsorption compartment to a desorption compartment and vice versa, and connected to the desorption compartment there is a gas circulation unit having one or more thermal burners and/or catalysts for treating the circulating gas.

According to an object of the invention, the treatment assembly has a gas combustion unit, which can be used separately without adsorbing and desorbing units when the VOC concentration is sufficiently high (>0.4 g/Nm³), without a concentration of solvent content performed by adsorption. In this case achieving the autothermal point does not require a concentration of solvent content performed by adsorption. The gas combustion unit can be a metal cell assembly with a rotating design equipped with a catalyst and a heat exchanger unit located sequentially. Gas enters from one side first to the heat exchanger where the gas heats up and is then led to the catalyst where the solvent gases are oxidized. After this the gas goes through from the other side which recovers heat. The cell assembly can also be composed of two parts where one cell accumulates heat and the other one is used for heating the inlet gas.

According to an object of the invention, the treatment assembly has one or more cooling compartments. This improves the efficiency of the treatment assembly because adsorption is more efficient at low temperatures. A construction integrated in the same assembly is also economically profitable. Advantageously, the adsorbent unit is cooled down to the prevailing outdoor temperature, such as 10-30°C, using outdoor air, for example.

According to an object of the invention, the cooling air of the adsorbent unit is led to the VOC gas exhaust air channel and further to a chimney, for example. This solution further simplifies the constructions making the treatment assembly more advantageous in technical aspects and more economical.

According to an object of the invention, the adsorbent unit is a continuously or periodically rotating cylindrical cell or a rotating disc assembly. The adsorbent unit can be arranged rotatable either continuously or periodically such that a part of the adsorbent unit is within the adsorption compartment adsorbing VOC gases and another part of the adsorbent unit is within the desorption unit for being regenerated.

According to an object of the invention, the adsorbent unit is divided into two or more zones. Advantageously it can be divided into 3-8 zones which are fillable with an adsorbent, such as activated carbon, zeolite or a similar adsorption stock. Advantageously, activated carbon is used in the treatment assembly in some particular embodiments.

Advantageously, the adsorbent unit is divided into 3-8 zones, of which 1-6 zones are simultaneously arrangeable in an adsorption compartment/compartments, 1 zone is arrangeable in a desorption compartment and 1 zone is arrangeable in a cooling compartment.

According to an object of the invention, the treatment assembly has one or more partition walls for separating the gas spaces of the adsorption compartment as well as of the desorption compartment and/or the cooling compartment at least partially from each other. This is beneficial in the control of the treatment assembly. It also improves the purification efficiency.

According to an object of the invention, the adsorption unit and the desorption unit have negative pressure for preventing leakage of adsorption gases and desorption gases. This improves the performance and safety of the treatment assembly.

According to an object of the invention, the circulation unit has a heating apparatus for the circulating gas, such as a heat exchanger having a rotating construction. Advantageously, the desorption compartment has an integrated continuously-operating regenerative or recuperative heat exchanger and a catalyst.

The heat exchanger can advantageously be covered with a catalytically active coating.

Advantageously, the regenerative heat exchanger can also be a two-part cell assembly in which one cell accumulates heat and the other one is used for heating the inlet air. The flow direction is changed when the cell heating the inlet gas has cooled down to a preset limit value. The other cell that has accumulated the heat of the exhaust gas starts heating up the incoming air.

With an optimized internal flow and a large surface area created by thin plates, the efficiency of the heat exchanger can be increased even to 96%. This enables a record-breakingly low autothermal point, i.e. combustion without additional energy. As low a solvent content as 0.4 g/m³, i.e. three hundredth parts of percent, provides the required energy. While burning, this solvent concentration increases the exhaust gas temperature by approximately 12°C.

According to an object of the invention, the treatment compartment has one or more heat exchangers and/or catalyst elements, which are advantageously made of thin corrugated metal plates having channels inbetween for leading the gas. This kind of construction functions as a static mixer. The construction essentially increases the number of contacts of, for example, hydrocarbons with the catalytically active surface. The Sherwood number (Sh) representing this so-called material transfer efficiency increases from 2.5 to 12; that is, gas molecules to be burned are in contact with the catalytically active surface almost five times more frequently.

The heat exchanger can be made of a 0.2-1.5 mm Al and/or Zn coated or acid-proof steel plate, using diagonally folded 100-200 wide "strips", in the same way as for the catalyst. Such a mixing construction essentially improves the heat transfer from the gas to the steel plate and vice versa. The Nusselt number representing the heat transfer in the flow channel increases directly compared to the channel from 2.5 to 12. This improves essentially the efficiency of the heat exchanger.

The heat exchanger is advantageously a metal cell with a rotating design and when entering through it the gas is heated up to the combustion temperature required in the catalyst, typically 250-350°C. The heat exchanger can be made, for example, of a bent (corrugated) metal strip or metal net.

The catalyst can be a rotating metal cell with a similar shape as that of the heat exchanger. VOC gas enters from the one half through both/all cells. In the accumulator cell the gas is heated to the combustion temperature and the VOC gases are oxidized in the catalyst located thereafter. After this, gases are led to the other half of the heat exchanger where the major part of heat is transferred to the accumulator cell.

According to an object of the invention, the circulating unit has a water spraying unit. The portion of water steam in the gas advantageously improves adsorption.

The above described catalytic or thermal burner, with advantageously a capacity of 1/15 to 1/40 of the adsorber capacity, can be used in regeneration. That is, if the adsorber capacity is 40.000 Nm³/h, the size of the regeneration unit is 1000-2700 Nm³/h depending on the VOC gas concentration and composition.

Due to the increased VOC gas concentration, so much heat generates during combustion that the regeneration gas can be heated up to the combustion temperature by means of the heat exchanger. Additional energy is not required for continuous operation. The catalyst/thermal burner and the heat exchanger need to be heated to the operating temperature only during the start-up, and hence the plant's operating costs are very low. In some embodiments, the heat exchanger can be made of a fire-proof material.

Advantageously, the accumulator cell can rotate either parallel with the catalyst or the catalyst can be fixed and the accumulator can rotate around it. In the first solution mentioned, the accumulator is advantageously made of a metal strip the width of which is advantageously 50-200 mm. The thickness of the metal strip is advantageously 0.2-1.0 mm and the fold height of the corrugated strip is advantageously 0.5-1.5 mm. In the latter case the accumulator is made of a metal net whose wire thickness is advantageously 0.2-1.0 mm and the mesh number of openings is advantageously 100-500 openings /in².

This treatment assembly can be used either together with the adsorber or, at higher concentrations, separately without the adsorber unit.

The rotation speed of the accumulators is advantageously 0.3-5 times/min.

Regeneration can be performed by heating the regeneration gas to a range of 100-160°C. The regeneration gas can be recycled using, for example, a traditional electric motor driven blower or a compressed air ejector. In regeneration, advantageously the same gas is mainly used so that only about 10-20% of the gas amount is replaced with outdoor air to obtain the oxygen required in the combustion. The gas with a temperature of about 350-600°C coming from the catalyst is cooled down, for example, with water mist or with a separate heat exchanger. Air, or in this case the oxygen required in the combustion, is added to the circulating gas just before the heat exchanger and the catalyst.

The plant can be advantageously used such that the air volume entering the circulation is constant, which is lower than the air amount required in combustion. This enables an accurate temperature control. After the catalytic or thermal combustion, the central part of heat is accumulated into the heat exchanger. The temperature of gas coming from the catalyst is 350-600°C. After the heat exchanger, the temperature is typically 300-400°C. The gas can be cooled down, for example, with water mist or/and with a heat exchanger to a regeneration temperature of 100-160°C.

The treatment assembly is particularly suitable for catalytic VOC combustion. The catalyst lowers the combustion temperature by about 500°C compared to thermal combustion, which requires a temperature of 760-950°C. This temperature difference is very significant since gases to be purified are cold and the solvent concentrations are often very low. Inlet gas must be heated to the combustion temperature and thereafter as great a portion of the energy as possible must be transferred so as to heat the inlet gas. The amount of energy required in thermal combustion is almost three times higher for heating the gas to the combustion temperature.

According to an object of the invention, connected to the treatment assembly there is a nitrogen oxides reducing unit the selective reductant of which, e.g. ammonia, can be used to reduce nitrogen oxides to nitrogen (N) and oxygen (O). An oxidizing catalyst preceding the reducing unit oxidizes a part (<50%) of nitrogen monoxides (NO) to nitrogen dioxides, which essentially accelerates the reduction reaction and enables decreasing essentially the size of the reduction catalyst.

The apparatus can additionally be used for reducing nitrogen oxides either alone or together with solvent gases. For this, a separate catalyst suitable for the purpose and a selective reductant, such as ammonia or urea, are required. This separate reduction catalyst is placed after the oxidation catalyst in the reactor chamber. Ammonia or a urea solution is sprayed before the reduction catalyst only to the first reactor unit. In the reduction catalyst, ammonia reacts with nitrogen oxides to form nitrogen and water.

The oxidation catalyst located before reduction has an essentially accelerating effect on the reduction since within this, besides hydrocarbons, also a part of nitrogen monoxide is oxidized to nitrogen dioxide. Nitrogen oxides exhausted from a combustion motor and heating boilers are monoxides for the major part. The three most important reaction chains in the reduction of nitrogen oxides are:

NH₃ + NO -> N₂ + H₂O Slow reaction

NH₃ + NO + NO₂ -> N₂ + H₂O Fast reaction

NH₃ + NO₂ -> N₂ + H₂O Slowest reaction

By oxidizing a part (<50%) of nitrogen monoxide to dioxide, the reactions take place the fastest. Due to this the size of the reduction catalyst can be decreased even by about 70%.

After the first reactor, gas enters a second reactor in which the first item in the flow direction is the reduction catalyst, where the rest of nitrogen oxides are reduced. After this, gas enters the oxidation catalyst, where the rest of hydrocarbons are oxidized. At the same time also any ammonia remains are oxidized. The gas mixture can mix well in the flow between the reactors.

Such an apparatus is also suitable for dissolving ammonia to nitrogen and hydrogen/water as well as for burning hydrogen sulfides to sulfur dioxide and sulfur trioxide + water.

Regeneration is finished when the temperature in the catalyst does not increase more than the preset limit value. The limit value can be 40-300°C, for example. When the top limit value is achieved, the flow of the circulating gas is reduced by decreasing the blower's rotation speed or by lowering the pressure of the gas entering the ejector. The temperature can also be adjusted by controlling the amount of water spraying.

As the last stage in the cooling unit, mere cold outdoor air can be circulated before the regenerated zone shifts to the adsorption of hydrocarbons from the exhaust gas.

Adsorption is advantageously performed by using activated carbon or zeolites. The diameter of the adsorption unit is about 2300 mm in small (<40.000 Nm³/h) plants, for example, such that it fits in a standard transport container. The thickness of the adsorbing layer is 150-800 mm depending on the adsorbing material. It is advantageously 700-800 mm for activated carbon and 150-300 mm for zeolite.

Adsorption is a slightly exothermic reaction. Adsorption is a fast, material-dependent event, which is why adsorption takes place in layers. Once the first layer is saturated, the next layer starts to adsorb hydrocarbons. Because the reaction is exothermic, the temperature of the active zone increases by 2-3°C. The rise in the temperature can be used to monitor the filling of the filter. When the temperature starts to rise in the bottom-most layer, this sector is transferred to regeneration. Using a temperature measurement or novel hydrocarbon sensors, it is possible to avoid the use and acquisition of HC analyzers. The problem with the HC analyzers is fast sliding of measurement results, which is why the analyzer must be calibrated every day. With an accurate temperature monitoring, the need for an expensive analyzer purchase and continuous calibration of the analyzer can be avoided.

The treatment assembly according to the invention lacks space-requiring pipeworks and valves. Since it is extremely advantageous in design, purchase and operating costs are very low compared to prior art technique. The operation and maintenance of the apparatus is also very economical. In addition, the process control is simple and efficient.

According to an object of the invention, the treatment assembly has at least two treatment compartments, placed within each other. In this embodiment the catalyst and the heat accumulator do not rotate, but the gas flow direction is changed at regular intervals using valves or with a temperature control. Advantageously, they are connected to each other with one or more connecting units for leading the gas to be treated to the nested treatment compartments, and the gas purification unit additionally has one or more adjustable gas-leading units for discharging the gas and/or feeding the gas to said nested treatment compartments. The connecting units can advantageously be used, for example, for changing the gas flow direction in the treatment compartment. Thus one and the same connecting sector, depending on the flow direction, can be used both for feeding and discharging the gas. Thus the apparatus becomes not only technically but also economically advantageous.

Advantageously, said nested treatment compartments are cylindrical in shape. On the inside, there is advantageously a cylinder, and on the outside, an annular cylinder. These are advantageously manufactured by wrapping folded strips first around the center shaft. Once all foil layers are wrapped in the center part, a sheet metal shell is placed on the outside of it, and an annular unit of the same volume is wrapped outside this, and an external shell is placed on top of the annular unit, and flow control valves are fastened to the bottom part. Advantageously the treatment compartments can be made in a common frame which is also equipped with gas flow channels replacing the pipework. By building the channels as a part of the construction, an advantageous integrated construction is achieved. With the solutions, a small size and simple design solutions are achieved, which clearly decrease costs compared to the prior art technique. Due to the space saving achieved through the compact design and elimination of the external pipework, a plant of 20.000 m³/h, for example, can now be installed in a 6 m container.

According to an object of the invention, the adjustable gas-leading unit has a sliding and turning design. Such a construction is robust and compact. Advantageously, the gas-leading units 13 are structurally closed to one or two directions. In such a gas-leading unit, gas can then, for example, flow forward and to the side, but never upward or downward.

In connection with a direction change, a small amount of unpurified gas can enter the outdoor air. This portion, below one percent of the total emission, is sometimes too much. For this condition, a front adsorber, such as activated carbon or zeolite front adsorber, can be placed in the front of the apparatus, to collect the solvent emissions entering the purification plant during the direction change. The front adsorber can be regenerated with hot air (100-150°C) at regular intervals, for example 1-3 hours.

According to an object of the invention, the gas purification treatment plant has one or more bypass channels for discharging gas from the gas purification treatment assembly. This makes the control and usability of the apparatus more versatile in various overtemperature conditions. The bypass channel is advantageously located in the connecting unit.

According to an object of the invention, noble-metal catalysts with very large surface areas, which are known to have good resistance to so-called catalyst poisons and high temperatures, are used in the gas purification treatment assembly. With these catalysts, a purification degree exceeding even 99% can be achieved on a long term basis. The estimated service life of such a catalyst can be as long as 20 years.

According to an object of the invention, the gas purification treatment assembly has one or more particle filters. The filter ensures trouble-free operation of the plant and advantageously lowers the plant's particle emissions.

The treatment assembly according to the invention can be made such that it requires proportionally very little space because it is technically (extremely) simple. The volume capacity of such a plant is good, and in addition, the volume can be taken into efficient use. This facilitates transports and installations in the point of application. The container does not require foundations or any support constructions. The treatment assembly can be connected to operational condition very fast, such as in a couple of days. The container can be advantageously transferred to a new location when required. For example, an assembly with a treatment capacity of 18.000-30.000 Nm³/h can advantageously be installed in a standard marine container (6 m).

Advantageously the treatment assembly is automated. It can be adapted to its operation automatically, for example, according to varying VOC concentrations. Its operation can be controlled either with a computer or, if required, with a GSM phone.

### Detailed description of invention

Some of the embodiments of the invention are described below in detail by making reference to the enclosed drawings.

Figure 1 shows the equipment diagram of the treatment assembly.

Figure 2 shows the top horizontal unit of the treatment assembly of Figure1.

Figure 3 shows the bottom horizontal unit of the treatment assembly of Figure 1.

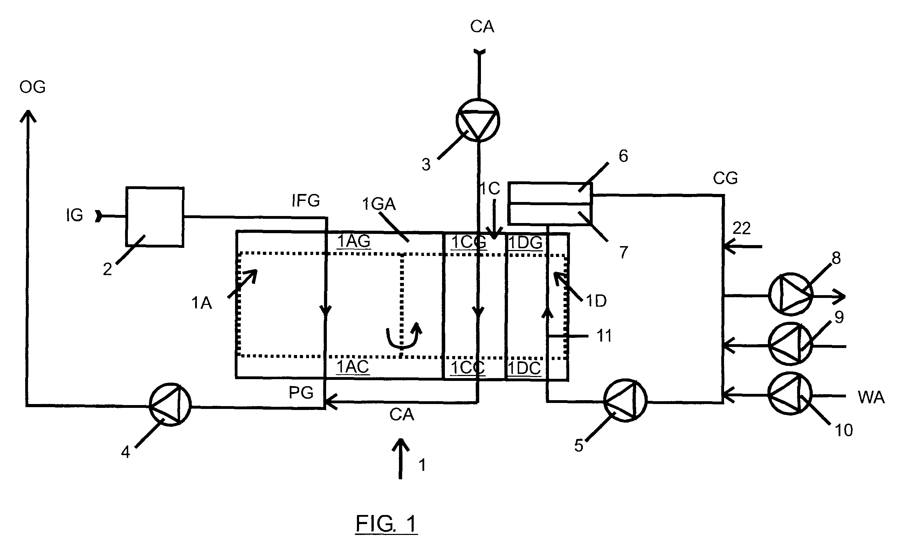

Figure 1 illustrates the equipment diagram of a treatment assembly, including a treatment assembly 1 with one adsorbent unit 11 and one adsorption compartment 1A for adsorbing VOC compounds to the adsorbent unit 11, and one desorption compartment 1 D for desorbing adsorbed VOC compounds from the adsorbent unit 11. The inlet gas IG containing VOC is first led through a filter 2, from where the filtered gas IFG is guided from the upper gas space 1AG of the adsorption compartment to the lower gas space 1 AC of the adsorption compartment through the adsorbent unit 11, and the purified gas PG is discharged by help of a blower 4. The blower 4 advantageously generates negative pressure in the adsorption compartment 1A. The adsorbent unit 11 is arranged to be rotatably transferrable from the adsorption compartment 1A to the desorption compartment 1 D and vice versa, and connected to the desorption compartment 1 D there is a gas circulation unit 22 having a blower 5 for guiding the circulating gas CG from the upper gas space 1 DG of the desorption compartment to its lower gas space 1 DC. The gas circulation unit 22 houses a catalyst 6 for treating the circulating gas CG catalytically, and a heat exchanger 7 for heating the circulating gas CG before the catalyst 6. It 22 also has a gas outlet 8 and a gas inlet 9 for replacing/adjusting the circulating gas CG as well as a water sprayer 10 for moisturizing the circulating gas with water WA. The treatment assembly 1 additionally has one cooling compartment 1C equipped with an air blower 3 for cooling the adsorbent unit 11 with cooling air CA. Cooling air CA is led as outlet gas OG from the lower gas space 1 CG of the cooling compartment to a chimney, for example, along with the purified gas PG.

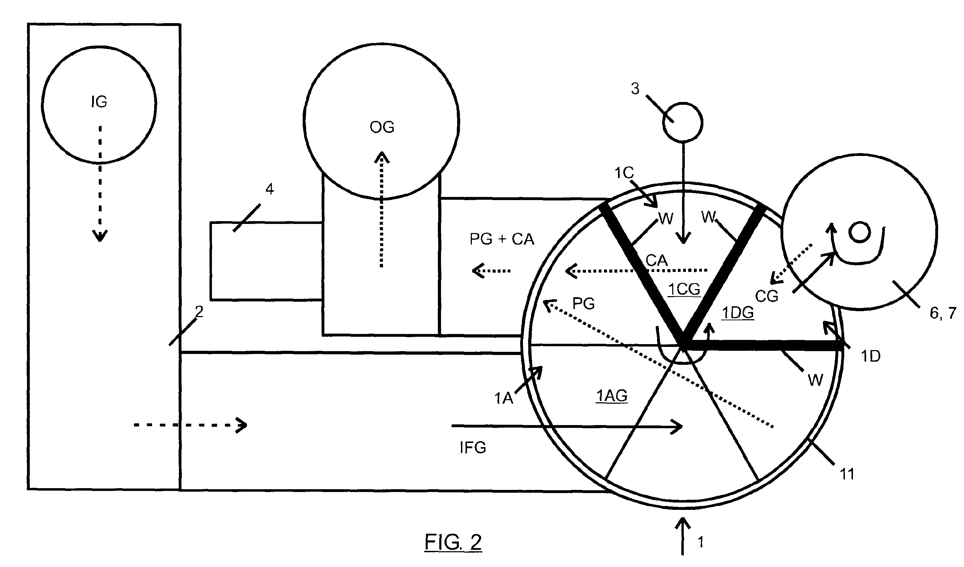

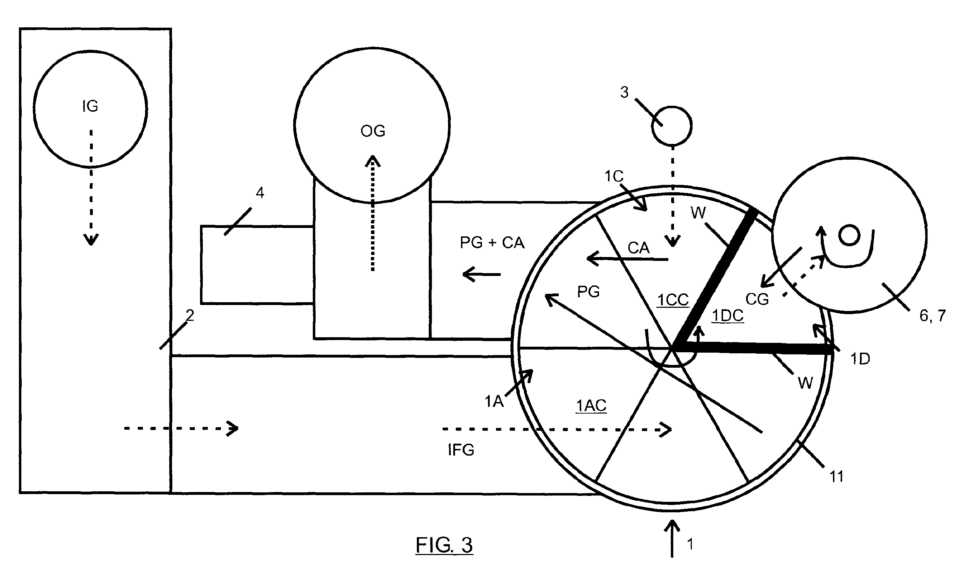

Figures 2 and 3 provide a top sectional view and a bottom sectional view of the apparatus of Figure 1 showing that the adsorbent unit 11 is divided into 6 zones, of which 4 zones are simultaneously installable in the adsorption compartment 1 A, 1 zone in the desorption compartment 1 D and 1 zone in the cooling compartment 1C. The treatment assembly 1 has partition walls W between the upper gas space 1AG of the adsorption compartment, the upper gas space 1DG of the desorption compartment and the upper gas space 1 CG of the cooling compartment. The bottom part has partition walls W around the lower gas space 1 DC of the desorption compartment such that the lower gas space 1 AC of the adsorption compartment and the lower gas space 1 CC of the cooling compartment are connected with each other in an open manner. This solution simplifies the constructions facilitating at the same time leading out of the cooling air CA and purified VOC gas PG as one outlet gas OG. Continuous flow lines illustrate flows in the sectional plane and broken lines represent flows occurring in other planes.

## Claims

1. A treatment assembly for VOC gases having one or more units, **characterized in that** the treatment assembly (1) has two or more treatment compartments (1A, 1D), such as adsorption compartments (1A) and desorption compartments (1D), and one or more treatment units (11), such as adsorbent units (11) and/or catalyst units, and
- said one or more treatment units (11) are arranged to be transferred to said two or more treatment compartments (1A, 1 D), such as from the adsorption compartment (1A) to the desorption compartment (1 D) or vice versa, and/or
- said two or more treatment compartments (1A, 1 D) are connected with one or more connecting units for leading VOC gases to nested treatment compartments, and the treatment assembly (1) additionally has one or more adjustable gas-leading units for discharging the gas and/or feeding the gas to said nested treatment compartments.

2. A treatment assembly according to claim 1, **characterized in that** the treatment assembly (1) has one or more adsorption compartments (1A) for adsorbing VOC compounds to the adsorbent unit (11) and one or more desorption compartments (1 D) for desorbing adsorbed VOC compounds from the adsorbent compartment (11), and at least a part of the adsorbent compartment (11) is arranged to be transferred from the adsorption compartment (1A) to the desorption compartment (1 D) and vice versa, and that connected closely and fixedly to the desorption compartment (1D) there is a gas circulation unit (22) having one or more thermal burners and/or catalysts (6) for treating the gas (CG) to be circulated.

3. A treatment assembly according to claim 1 or 2, **characterized in that** the treatment assembly (1) has one or more catalyst units equipped with regenerative heat exchangers to be used as solvent treatment units at VOC concentrations exceeding 0.4 g/Nm³.

4. A treatment assembly according to claim 2, **characterized in that** the treatment assembly (1) has one or more cooling compartments (1C) for cooling the adsorbent unit (11), such as advantageously for cooling the adsorbent unit (11) to 10-30°C.

5. A treatment assembly according to claim 2, **characterized in that** the adsorbent unit (11) is divided into two or more zones.

6. A treatment assembly according to claim 2, **characterized in that** the treatment assembly (1) has one or more partition walls (W) for separating the gas spaces (1AG, 1CG, 1DG) of the adsorption compartment (1A) as well as of the desorption compartment (1D) and/or the cooling compartment (1C) at least partially from each other.

7. A treatment assembly according to any of the preceding claims, **characterized in that** the treatment unit (11) is a continuously or periodically rotating cylindrical cell or a rotating disc assembly.

8. A treatment assembly according to any of the preceding claims, **characterized in that** said at least two treatment compartments (1A, 1D) are nested relative to each other.

9. A treatment assembly according to any of the preceding claims, **characterized in that** the adsorbent unit (11) contains activated carbon and/or zeolites as adsorbent.

10. A treatment assembly according to any of the preceding claims, **characterized in that** the circulation unit (22) houses a water spray (10).

11. A treatment assembly according to any of the preceding claims, **characterized in that** the circulation unit (22) has a heating apparatus (7) for the gas to be circulated, such as a catalyst and/or heat exchanger with a rotating design.

12. A treatment assembly according to claim 11, **characterized in that** the nested treatment compartments are cylindrical in design.

13. A treatment assembly according to any of the preceding claims to be used separately without an adsorber, **characterized in that** the treatment assembly (1) has one or more front adsorbers for collecting temporarily solvent emissions entering the treatment assembly (1).

14. A treatment assembly according to any of the preceding claims, **characterized in that** the treatment assembly (1) is installed in a transport container.

15. A treatment assembly according to any of the preceding claims, **characterized in that** it has one or more oxidation catalysts and one or more reduction catalysts.

16. A treatment assembly according to any of the preceding claims, **characterized in that** connected to the treatment assembly (1) there is a nitrogen oxides reducing unit, where nitrogen oxides are reducable to nitrogen (N) and oxygen (O) by means of a selective reductant, for example ammonia.

17. A method for treating VOC gases in a treatment assembly having one or more adsorbent units, **characterized in that** two or more treatment compartments (1A, 1D), such as adsorption compartments (1A) and desorption compartments (1D), and one or more treatment units (11), such as adsorbent units (11) and/or catalyst units, are arranged in the treatment assembly (1), and
- said one or more treatment units (11) are arranged to be transferred to said two or more treatment compartments (1A, 1 D), such as from the adsorption compartment (1A) to the desorption compartment (1D) and vice versa, and/or
- said two or more treatment compartments (1A, 1D) are connected with one or more connecting units for leading VOC gases to nested treatment compartments, and the treatment assembly (1) additionally has one or more adjustable gas-leading units for discharging the gas and/or feeding the gas to said nested treatment compartments.
